# EUROPEAN PATENT SPECIFICATION

(11) **EP 3 151 382 B1**
(45) Date of publication and mention of the grant of the patent: **26.06.2019**
(21) Application number: 15800569.4
(22) Date of filing: 11.02.2015
(51) Int. Cl.: H02K 1/14, H02K 29/03, H02K 21/18, H02K 15/06

(54) **STATOR STRUCTURE OF BRUSHLESS DUST COLLECTOR MOTOR AND FORMING METHOD THEREFOR**
STATORSTRUKTUR EINES BÜRSTENLOSEN STAUBSAMMELMOTORS UND HERSTELLUNGSVERFAHREN DAFÜR
STRUCTURE DE STATOR D'UN MOTEUR SANS BALAIS DE COLLECTEUR DE POUSSIÈRE ET SON PROCÉDÉ DE FORMATION

(30) Priority: 28.05.2014 CN 201410231279
(43) Date of publication of application: 05.04.2017
(73) Proprietor: Kingclean Electric Co., Ltd., Suzhou, Jiangsu 215009 (CN)
(72) Inventor: NI, Zugen, Suzhou Jiangsu 215009 (CN)
(74) Representative: Eisenführ Speiser
(86) International application number: PCT/CN2015/072750
(87) International publication number: WO 2015/180515

(56) References cited:
- CN-A- 103 618 427
- CN-A- 103 618 427
- CN-A- 104 283 335
- CN-U- 202 840 879
- CN-U- 203 387 302
- CN-U- 203 387 302
- CN-U- 203 896 056
- FR-A- 1 466 452
- GB-A- 179 147
- US-A- 4 095 130
- US-A1- 2010 225 196

## Description

This application claims the benefit of priority to Chinese patent application No. 201410231279.4, titled "STATOR STRUCTURE OF MOTOR OF BRUSHLESS VACUUM CLEANER AND FORMING METHOD THEREFOR", filed with the Chinese State Intellectual Property Office on May 28, 2014.

### FIELD

The present application relates to the technical field of producing and manufacturing motors of vacuum cleaners, and particularly relates to a stator structure of a motor of a brushless vacuum cleaner and a method for forming the stator structure.

### BACKGROUND

A vacuum cleaner is an electric cleaning apparatus which utilizes a motor to drive blades to rotate at a high speed, to generate a negative air pressure in a sealed housing, and thereby suctioning dusts into a dust bag. Vacuum cleaners can be generally divided into vertical type vacuum cleaners, horizontal type vacuum cleaners, and portable type vacuum cleaners and the like according to the structure.

A vacuum cleaner motor is a core component of a vacuum cleaner, and generally consists of two parts, including a motor part and a fan part. Since the vacuum cleaner motor is required to operate at a high rotational speed, generally at 20000-30000 rotations per minute, conventional vacuum cleaner motors are generally series excited motors and small direct current motors. The series excited motors and the small direct current motors all belong to brush motors, and their rotational speeds range from 20000 rotations per minute to 40000 rotations per minute. Though their rotational speeds can meet the requirement for the vacuum cleaner motor, the brush motors have large volumes and low performances, and are not portable and has a limited application scope.

With the development of the electric industry, vacuum cleaner motors are also developed in a trend of high performance, high efficiency and minimization. Brushless direct current motors have been more and more widely used in the industry due to their advantages, such as small volume, low noise, high efficiency, high reliability and strong adaptability.

For meeting the requirements of brushless motors, generally, the volume of an iron core should be reduced as much as possible. A conventional iron core has an integral structure, and coils are wound on left and right sides of the iron core, and the wire winding process is complicated. Since an upper end of the iron core is provided with a pole shoe, when winding wires, the enameled wire is likely to hit the pole shoe which may cause damages to an enameled coating, therefore adversely affecting the performance of the stator. In the case that the iron core has a small volume, the wire winding process is more difficult.

CN 203387302 U provides a U-shaped stator core, a permanent magnet motor using the same and a water pump using the same. An iron core includes an L-shaped left half portion and a mirrored L-shaped right half portion which are divided from the U shape, the two portions can be connected in butt joint to form the U shape, and a structure for connecting and fixing is disposed at the butt joint of the two portions. The permanent magnet motor includes a permanent magnet rotor and a stator using the iron core. The pump includes a pump cover, a pump body, an impeller and the permanent magnetism motor. The U-shaped stator core can raise the utilization rate of raw materials, so as to reduce the manufacturing cost of products. According to the permanent magnetism motor using the stator core and the pump driven by the permanent magnetism motor, manufacturing costs are reduced, and performance is improved.

GB 179,147 A provides a magneto more particularly for use with V-engines having their cylinders inclined at an angle up to 90, the rotating magnet has the lateral boundary surfaces of the pole pieces on one side inclined at an acute angle with the central plane. The other flanks are parallel to the central plane and one pole-piece of the armature has a longer arc than the other pole-piece, so that in the two central positions of the magnet, the flux path is closed through the pole-piece.

CN 103618427 A provides a low-cost miniature single-phase permanent magnet brushless direct current motor which includes: a permanent magnet rotor which is a cylindrical shape for magnetizing two radial poles; a stator which includes a "U"-shaped stator iron core and a direct current stator winding penetrated by the stator iron core; and a position sensor which is used for detecting a magnetic pole position of the permanent magnet rotor so as to control a power supply of the stator winding. The stator iron core includes a pure "U"-shaped polar body, a magnetic yoke part, a left pole shoe, and a right pole shoe, wherein the left pole shoe and the right pole shoe are formed at an upper part of two arms of the "U" shape; a pole face of the left pole shoe is close to a left side of a cylindrical surface of the permanent magnet rotor; a pole face of the right pole shoe is close to a right side of the cylindrical surface of the permanent magnet rotor; and the stator iron core is characterized in that a plane of two pole horns of at least one pole shoe intersects a symmetry axis of the "U" shape.

Therefore, in view of the above issues, it is necessary to provide a new stator iron core structure, which is applicable to a brushless vacuum cleaner motor, to allow the motor to have advantages such as having high rotational speed, high performance, a small volume, being portable and energy-saving, and also to simplify the wire winding process of the stator, improve the production efficiency, and avoid damages to the enameled coating.

### SUMMARY

In view of this, a stator structure of a brushless vacuum cleaner motor is provided according to the present application, to allow the motor to have advantages such as having high rotational speed, high performance, a small volume, being portable and energy-saving. A stator iron core is designed as a separated structure, wire winding process can be performed respectively on the iron cores at two sides, and then the two iron cores are fixed, thereby simplifying the winding process of the stator, improving the production efficiency, and avoiding damages to an enameled coating.

A stator structure of a brushless vacuum cleaner motor is provided according to an object of the present application, wherein the stator structure has a separated structure, and includes a C-shaped left iron core and a C-shaped right iron core detachably connected to each other to form a horse-shoe shaped stator, wherein each of the C-shaped left iron core and the C-shaped right iron core comprises an upper end, a lower end, and a longitudinal part connecting the upper end and the lower end, and the C-shaped left iron core and the C-shaped right iron core are both wound with a coil and are fixed to each other by welding their lower ends, and wherein the upper ends of the C-shaped left iron core and the C-shaped right iron core extend to form pole shoes, between which a rotor can be received, wherein each pole shoe comprises a front edge and a rear edge, and the front edge and the rear edge of the pole shoe are defined in the circumferential direction of an inner circle of the pole shoe, and wherein the front edge of each pole shoe is deviated counterclockwise with respect to an axis passing by the center of the inner circle of the pole shoe and parallel to the longitudinal part of the respective C-shaped iron core, in order to form a chamfer angle ranging from 30 degrees to 60 degrees, and wherein the rear edge of the pole shoe is rounded to form a rounded corner.

Preferably, the front edge of the pole shoe is deviated counterclockwise with respect to the axis passing by the center of the inner circle of the pole shoe and parallel to the longitudinal part of the respective C-shaped iron core, to form the chamfer angle of 45 degrees.

Preferably, a coil winding is wound around each of the C-shaped left iron core and the C-shaped right iron core, and the C-shaped left iron core and the C-shaped right iron core both wound with the coil winding are fixed and then combined to form the stator structure of the brushless vacuum cleaner motor.

Preferably, the C-shaped left iron core and the C-shaped right iron core are fixed in a locking manner, and connecting portions of the C-shaped left iron core and the C-shaped right iron core are provided with a locking groove or a locking member matching with each other.

Preferably, the locking groove and the locking member each has a rectangular, dovetail-shaped or U-shaped cross section.

Preferably, the connecting portions of the C-shaped left iron core and the C-shaped right iron core each extends outwards to form a fixing component, and fixing components of the C-shaped left iron core and the C-shaped right iron core are fixed by welding.

Preferably, the fixing components are respectively protrusions integrally formed on bottoms of the C-shaped left iron core and the C-shaped right iron core.

A method for forming a stator structure of a brushless vacuum cleaner motor, wherein the stator structure has a separated structure, and comprises a C-shaped left iron core and a C-shaped right iron core detachably connected to each other to form a horse-shoe shaped stator, wherein each of the C-shaped left iron core and the C-shaped right iron core comprises an upper end, a lower end, and a longitudinal part connecting the upper end and the lower end, wherein the C-shaped left iron core and the C-shaped right iron core are both wound with a coil and are fixed to each other by welding their lower ends; and wherein the upper ends of the C-shaped left iron core and the C-shaped right iron core extend to form pole shoes, between which a rotor can be received, wherein each pole shoe comprises a front edge and a rear edge, and the front edge and the rear edge of the pole shoe are defined in the circumferential direction of an inner circle of the pole shoe, and wherein the front edge of each pole shoe is deviated counterclockwise with respect to an axis passing by the center of the inner circle of the pole shoe and parallel to the longitudinal part of the respective C-shaped iron core, in order to form a chamfer angle ranging from 30 degrees to 60 degrees, and wherein the rear edge of the pole shoe is rounded to form a rounded corner, wherein the method includes the following steps:
1) machining and forming the C-shaped left iron core and the C-shaped right iron core respectively, and integrally forming fixing components for welding on the lower ends of the C-shaped left iron core and the C-shaped right iron core;
2) chamfering the front edge of the pole shoe of each of the C-shaped left iron core and the C-shaped right iron core by an angle ranging from 30 degrees to 60 degrees according to a use requirement, to form a chamfer angle deviated counterclockwise, and rounding the rear edge of the pole shoe of each of the C-shaped left iron core and the C-shaped right iron core to form the rounded corner;
3) machining and forming a locking groove and a locking member matching with
   each other in connecting surfaces at the lower ends of the C-shaped left iron core and the C-shaped right iron core respectively;
4) winding coil windings respectively around the C-shaped left iron core and the C-shaped right iron core;
5) embedding the locking member into the locking groove, to fixedly connect the C-shaped left iron core and the C-shaped right iron core, to ensure the C-shaped left iron core and the C-shaped right iron core to have a fixed relative position; and
6) performing welding at the fixing components, to finally combine the C-shaped left iron core and the C-shaped right iron core to form the stator structure of the brushless vacuum cleaner motor.

Compared with the conventional technology, the stator structure of the brushless vacuum cleaner motor according to the present application has the following advantages.
1. The stator structure is applicable to a high speed brushless motor, thus allowing the motor to have advantages such as high rotational speed, high performance, small volume, being portable, energy saving and etc.
2. The stator iron core is designed as a separated structure, wire winding process can be performed respectively on the two iron cores, and then the two iron cores are fixed, thereby simplifying the wire winding process of the stator, improving the production efficiency, and avoiding damages to an enameled coating.
3. The pole shoe chamfer angles can be set according to structural requirements of the stator iron core, thus meeting the usage requirement of the rotational speed of the brushless motor.
4. The two iron cores at the two sides are fixedly connected in an embedding manner, thus effectively ensuring the accuracy of the connecting positions of the two iron cores, and improving the stability and reliability of the operation of the motor.

### BRIEF DESCRIPTION OF THE DRAWINGS

For more clearly illustrating embodiments of the present application or technical solutions in the conventional technology, drawings referred to describe the embodiments or the conventional technology will be briefly described hereinafter. Apparently, the drawings in
the following description are only some examples of the present application, and for the person skilled in the art, other drawings may be obtained based on these drawings without any creative efforts.
Figure 1 is a schematic view showing a stator structure of a brushless vacuum cleaner motor according to the present application in a separated state.
Figure 2 is a schematic view showing the stator structure of the brushless vacuum cleaner motor according to the present application in a combined state.

Names of components denoted by reference numerals or letters in the drawings:

| | | | |
|---|---|---|---|
| 1 | left iron core, | 2 | right iron core, |
| 3 | front edge of pole shoe, | 4 | rear edge of pole shoe, |
| 5 | coil winding, | 6 | locking groove, |
| 7 | locking member, and | 8 | fixing component. |

### DETAILED DESCRIPTION

Conventional vacuum cleaner motors are generally brush motors, and the brush motors have large volumes and low performances, are not portable and have a limited application scope. Brushless motors have been more and more widely used in the industry due to advantages, such as small volume, low noise, high efficiency, high reliability and strong adaptability. For meeting the requirements of brushless motors, generally, the volume of an iron core should be reduced as much as possible. A conventional iron core has an integral structure, and coils are wound on left and right sides of the iron core, the wire winding process is complicated. Since an upper end of the iron core is provided with a pole shoe, when winding wires, the enameled wire is likely to hit the pole shoe which may cause damages to an enameled coating, therefore adversely affecting the performance of the stator. In the case that the iron core has a small volume, the wire winding process is more difficult.

In view of the deficiencies in the conventional technology, a stator structure of a brushless vacuum cleaner motor is provided according to the present application, to allow the motor to have advantages such as having high rotational speed, high performance, a small volume, being portable and energy-saving. A stator iron core is designed as a separated structure, wire winding process can be performed respectively on the iron cores at two sides, and then the two iron cores are fixed, thereby simplifying the winding process of the stator, improving the production efficiency, and avoiding damages to an enameled coating.

The technical solutions of the present application will be clearly and completely described hereinafter in conjunction with embodiments. Apparently, the embodiments described are only some examples of the present application, and not all implementations. Other embodiments obtained by the person skilled in the art based on the embodiments of the present application without any creative efforts all fall into the scope of the present application.

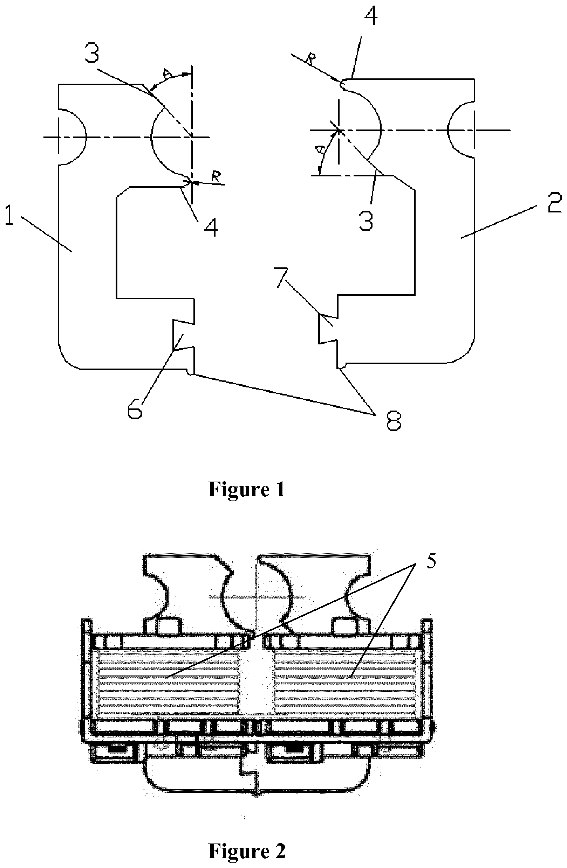

Reference is made to Figures 1 and 2, as illustrated, a stator structure of a brushless vacuum cleaner motor is provided, and has a separated structure. The stator structure includes a left iron core 1 and a right iron core 2 which are detachably connected. The left iron core and the right iron core each have a chamfer angle on one edge, and the chamfer angle ranges from 30 degrees to 60 degrees. The left iron core 1 wound with a coil and the right iron core 2 wound with a coil are fixed by welding. A coil winding 5 is wound around each of the left iron core 1 and the right iron core 2, and the left iron core and the right iron core both wound with the coil winding 5 are fixed and then combined to form the stator structure of the brushless vacuum cleaner motor. With the iron core having the separated structure, the left iron core and the right iron core can be fixed after coils are wound around the left iron core and the right iron core, thus simplifying the wire winding process, improving the production efficiency, and also avoiding damages to the surface coating of the enameled wire.

An upper end of each of the left iron core 1 and the right iron core 2 extends to form a pole shoe, and the thickness of a front edge of the pole shoe is less than the thickness of a rear edge of the pole shoe. A front edge 3 of the pole shoe is deviated leftwards with the center of an inner circle of the pole shoe as a reference, to form a chamfer angle ranging from 30 degrees to 60 degrees (indicated as A in Figure 1). A rear edge 4 of the pole shoe is rounded to from a rounded corner R. The normal operation of the motor can be ensured by providing the pole shoe chamfer angle ranging from 30 degrees to 60 degrees.

The front edge of the pole shoe is deviated leftwards with the center of the inner circle of the pole shoe as a reference, to form a chamfer angle of 45 degrees. In the case that the pole shoe chamfer angle is 45 degrees, the motor has a good performance and a high operation speed, and the start and operation of the motor are facilitated, and further the arrangement of other components inside the motor, such as a Hall element, is facilitated. In addition, the chamfer angle may also be 35 degrees, 40 degrees, 50 degrees, 55 degrees and etc., the specific angle may be determined according to use requirements, which is not limited here.

The left iron core 1 and the right iron core 2 are fixed in a locking manner. Connecting portions of the left iron core and the right iron core are provided with a locking groove 6 or a locking member 7 matching with each other. With the fixing manner of locking and embedding, it can facilitate fixing the two iron cores to each other, and ensuring the accuracy of the connecting position, and avoiding a connection error of the iron cores and preventing the normal operation of the motor from being adversely affected, and improving stability and reliability of the operation of the motor.

Each of the locking groove 6 and the locking member 7 has a rectangular, dovetail-shaped, or U-shaped cross section, or the like. In the case of employing the dovetail-shaped cross section, the locking member may be inserted into the locking groove from one side of the locking groove, to achieve position limiting of the connecting portions of the iron cores in directions X and Z, to ensure the accuracy of the fixing positions. The dimension and number of the locking groove may be determined according to the size and thickness of the iron core. If multiple locking grooves and multiple locking members are employed, the multiple locking grooves and the multiple locking members are respectively evenly arranged in parallel with each other, thus increasing the connection stability.

The connecting portions of the left iron core and the right iron core each extends outwards to form a fixing component 8, and the fixing components at the two sides are fixed by welding. The fixing components are protrusions integrally formed at the bottoms of the left iron core and the right iron core respectively. In the state that the left and right iron cores are locked, the protrusions can be fixed by welding to improve the structural stability of the stator iron core of the separated structure.

A method for forming a stator structure of a brushless vacuum cleaner motor includes the following steps.
(1) A left iron core and a right iron core are machined and formed respectively, and a fixing component for welding is integrally formed on a bottom of each of the left iron core and the right iron core.
(2) A front edge of a pole shoe of each of the left iron core and the right iron core is chamfered by an angle ranging from 30 degrees to 60 degrees according to a use requirement, to form a leftward deviated chamfer angle, and a rear edge of the pole shoe of each of the left iron core and the right iron core is rounded to form a rounded corner.
(3) A locking groove and a locking member matching with each other are respectively machined and formed in connecting surfaces at the bottoms of the left iron core and the right iron core.
(4) A coil winding is wound around each of the left iron core and the right iron core.
(5) The locking member is embedded into the locking groove to fixedly connect the left iron core and the right iron core, to ensure the left iron core and the right iron core to have a fixed relative position.
(6) Welding is performed at the fixing components to finally combine the left iron core and the right iron core to form the stator structure of the brushless vacuum cleaner motor.

A stator structure of a brushless vacuum cleaner motor is disclosed according to the present application, and the stator structure has a separated structure and includes a left iron core and a right iron core detachably connected. An upper end of each of the left iron core and the right iron core extends to form a pole shoe. A front edge of the pole shoe is deviated leftwards with the center of an inner circle of the pole shoe as a reference, to form a chamfer angle ranging from 30 degrees to 60 degrees, and a rear edge of the pole shoe is rounded to form a rounded corner. The pole shoe chamfer angles can be set according to structural requirements of the stator iron cores, thus meeting the usage requirement of the rotational speed of the brushless motor.

A coil winding is wound around each of the left iron core and the right iron core, and the left iron core and the right iron core both wound with the coil winding are fixed and then combined to form the stator structure of the brushless vacuum cleaner motor. The stator iron core is designed as a separated structure, wire winding process can be performed respectively on the two iron cores, and then the two iron cores are fixed, thereby simplifying the wire winding process of the stator, improving the production efficiency, and avoiding damages to an enameled coating.

The two iron cores at two sides are fixedly connected in an embedding manner, thus effectively ensuring the accuracy of the connecting positions of the two iron cores, and improving the stability and reliability of the operation of the motor.

The stator structure is applicable to a high speed brushless motor, thus allowing the motor to have advantages such as high rotational speed, high performance, small volume, being portable, energy saving and etc.

Based on the above description of the disclosed embodiments, the person skilled in the art is capable of carrying out or using the present application. It is obvious for the person skilled in the art to make many modifications to these embodiments. The general principle defined herein may be applied to other embodiments without departing from the scope of the present application as defined in the appended claims.

## Claims

1. A stator structure of a brushless vacuum cleaner motor, wherein the stator structure has a separated structure, and comprises a C-shaped left iron core (1) and a C-shaped right iron core (2) detachably connected to each other to form a horse-shoe shaped stator,
wherein, each of the C-shaped left iron core (1) and the C-shaped right iron core (2) comprises an upper end, a lower end, and a longitudinal part connecting the upper end and the lower end, and the C-shaped left iron core (1) and the C-shaped right iron core (2) are both wound with a coil and are fixed to each other by welding their lower ends; and
wherein the upper ends of the C-shaped left iron core (1) and the C-shaped right iron core (2) extend to form pole shoes, between which a rotor can be received,
wherein each pole shoe comprises a front edge (3) and a rear edge (4), and the front edge (3) and the rear edge (4) of the pole shoe are defined in the circumferential direction of an inner circle of the pole shoe, and
wherein the front edge (3) of each pole shoe is deviated counterclockwise with respect to an axis passing by the center of the inner circle of the pole shoe and parallel to the longitudinal part of the respective C-shaped iron core, in order to form a chamfer angle ranging from 30 degrees to 60 degrees, and wherein the rear edge (4) of the pole shoe is rounded to form a rounded corner (R).

2. The stator structure of the brushless vacuum cleaner motor according to claim 1, wherein the front edge (3) of the pole shoe is deviated counterclockwise with respect to the axis passing by the center of the inner circle of the pole shoe and parallel to the longitudinal part of the respective C-shaped iron core to form the chamfer angle of 45 degrees.

3. The stator structure of the brushless vacuum cleaner motor according to claim 1, wherein a coil winding (5) is wound around each of the C-shaped left iron core (1) and the C-shaped right iron core (2), and the C-shaped left iron core (1) and the C-shaped right iron core (2) both wound with the coil winding (5) are fixed and then combined to form the stator structure of the brushless vacuum cleaner motor.

4. The stator structure of the brushless vacuum cleaner motor according to claim 1, wherein the C-shaped left iron core (1) and the C-shaped right iron core (2) are fixed in a locking manner, and connecting portions of the C-shaped left iron core (1) and the C-shaped right iron core (2) are provided with a locking groove (6) or a locking member (7) matching with each other.

5. The stator structure of the brushless vacuum cleaner motor according to claim 4, wherein the locking groove (6) and the locking member (7) each has a rectangular, dovetail-shaped or U-shaped cross section.

6. The stator structure of the brushless vacuum cleaner motor according to claim 1, wherein the connecting portions of the C-shaped left iron core (1) and the C-shaped right iron core (2) each extends outwards to form a fixing component (8), and fixing components (8) of the C-shaped left iron core (1) and the C-shaped right iron core (2) are fixed by welding.

7. The stator structure of the brushless vacuum cleaner motor according to claim 6, wherein the fixing components (8) are respectively protrusions integrally formed on bottoms of the C-shaped left iron core (1) and the C-shaped right iron core (2).

8. A method for forming the stator structure of the brushless vacuum cleaner motor according to any one of claims 1 to 7,
wherein the stator structure has a separated structure, and comprises a C-shaped left iron core (1) and a C-shaped right iron core (2) detachably connected to each other to form a horse-shoe shaped stator,
wherein each of the C-shaped left iron core (1) and the C-shaped right iron core (2) comprises an upper end, a lower end, and a longitudinal part connecting the upper end and the lower end,
wherein the C-shaped left iron core (1) and the C-shaped right iron core (2) are both wound with a coil and are fixed to each other by welding their lower ends; and
wherein the upper ends of the C-shaped left iron core (1) and the C-shaped right iron core (2) extend to form pole shoes, between which a rotor can be received,
wherein each pole shoe comprises a front edge (3) and a rear edge (4), and the front edge (3) and the rear edge (4) of the pole shoe are defined in the circumferential direction of an inner circle of the pole shoe, and
wherein the front edge (3) of each pole shoe is deviated counterclockwise with respect to an axis passing by the center of the inner circle of the pole shoe and parallel to the longitudinal part of the respective C-shaped iron core, in order to form a chamfer angle ranging from 30 degrees to 60 degrees, and wherein the rear edge (4) of the pole shoe is rounded to form a rounded corner (R),
the method comprising the following steps:
1) machining and forming the C-shaped left iron core (1) and the C-shaped right iron core (2) respectively, and integrally forming fixing components (8) for welding on the lower ends of the C-shaped left iron core (1) and the C-shaped right iron core (2);
2) chamfering the front edge (3) of the pole shoe of each of the C-shaped left iron core (1) and the C-shaped right iron core (2) by an angle ranging from 30 degrees to 60 degrees according to a use requirement, to form a chamfer angle deviated counterclockwise, and rounding the rear edge (4) of the pole shoe of each of the C-shaped left iron core (1) and the C-shaped right iron core (2) to form the rounded corner (R);
3) machining and forming a locking groove (6) and a locking member (7) matching with each other in connecting surfaces at the lower ends of the C-shaped left iron core (1) and the C-shaped right iron core (2) respectively;
4) winding coil windings (5) respectively around the C-shaped left iron core (1) and the C-shaped right iron core (2);
5) embedding the locking member (7) into the locking groove (6), to fixedly connect the C-shaped left iron core (1) and the C-shaped right iron core (2), to ensure the C-shaped left iron core (1) and the C-shaped right iron core (2) to have a fixed relative position; and
6) performing welding at the fixing components (8), to finally combine the C-shaped left iron core (1) and the C-shaped right iron core (2) to form the stator structure of the brushless vacuum cleaner motor.

## Patentansprüche

1. Statorstruktur eines bürstenlosen Staubsaugermotors, wobei die Statorstruktur eine geteilte Struktur aufweist und einen C-förmigen linken Eisenkern (1) und einen C-förmigen rechten Eisenkern (2) umfasst, die abnehmbar miteinander verbunden sind, um einen hufeisenförmigen Stator zu bilden,
wobei jeder des C-förmigen linken Eisenkerns (1) und des C-förmigen rechten Eisenkerns (2) ein oberes Ende, ein unteres Ende und einen longitudinalen Teil umfasst, der das obere Ende und das untere Ende verbindet, und der C-förmige linke Eisenkern (1) und der C-förmige rechte Eisenkern (2) beide mit einer Spule umwickelt sind und durch Verschweißen ihrer unteren Enden miteinander fixiert sind; und
wobei die oberen Enden des C-förmigen linken Eisenkerns (1) und des C-förmigen rechten Eisenkerns (2) sich erstrecken, um Polschuhe zu bilden, zwischen denen ein Rotor aufgenommen werden kann,
wobei jeder Polschuh eine Vorderkante (3) und eine Hinterkante (4) umfasst und die Vorderkante (3) und die Hinterkante (4) des Polschuhs in der umlaufenden Richtung eines inneren Kreises des Polschuhs definiert sind, und
wobei die Vorderkante (3) von jedem Polschuh entgegen dem Uhrzeigersinn bezüglich einer Achse abgeknickt ist, die durch das Zentrum des inneren Kreises des Polschuhs und parallel zu dem longitudinalen Teil des entsprechenden C-förmigen Eisenkerns verläuft, um einen Phasenwinkel in einem Bereich von 30° bis 60° zu bilden, und wobei die Hinterkante (4) des Polschuhs abgerundet ist, um eine abgerundete Ecke (R) zu bilden.

2. Statorstruktur des bürstenlosen Staubsaugermotors nach Anspruch 1, wobei die Vorderkante (3) des Polschuhs entgegen dem Uhrzeigersinn bezüglich der Achse abgeknickt ist, die durch das Zentrum des inneren Kreises des Polschuhs und parallel zu dem longitudinalen Teil des entsprechenden C-förmigen Eisenkerns verläuft, um den Phasenwinkel von 45° zu bilden.

3. Statorstruktur des bürstenlosen Staubsaugermotors nach Anspruch 1, wobei eine Spulenwicklung (5) um jeden des C-förmigen linken Eisenkerns (1) und des C-förmigen rechten Eisenkerns (2) gewickelt ist und der C-förmige linke Eisenkern (1) und der C-förmige rechte Eisenkern (2), die beide mit der Spulenwicklung (5) umwickelt sind, fixiert und dann kombiniert sind, um die Statorstruktur des bürstenlosen Staubsaugermotors zu bilden.

4. Statorstruktur des bürstenlosen Staubsaugermotors nach Anspruch 1, wobei der C-förmige linke Eisenkern (1) und der C-förmige rechte Eisenkern (2) in einer arretierenden Weise fixiert sind und Verbindungsabschnitte des C-förmigen linken Eisenkerns (1) und des C-förmigen rechten Eisenkerns (2) mit einer Arretierungsnut (6) oder einem Arretierungselement (7) bereitgestellt sind, die zueinander passen.

5. Statorstruktur des bürstenlosen Staubsaugermotors nach Anspruch 4, wobei die Arretierungsnut (6) und das Arretierungselement (7) jeweils einen rechteckigen, Schwalbenschwanz-förmigen oder U-förmigen Querschnitt aufweist.

6. Statorstruktur des bürstenlosen Staubsaugermotors nach Anspruch 1, wobei die Verbindungsabschnitte des C-förmigen linken Eisenkerns (1) und des C-förmigen rechten Eisenkerns (2) sich jeweils nach außen erstrecken, um eine Fixierungskomponente (8) zu bilden, und Fixierungskomponenten (8) des C-förmigen linken Eisenkerns (1) und des C-förmigen rechten Eisenkerns (2) durch Verschweißen fixiert sind.

7. Statorstruktur des bürstenlosen Staubsaugermotors nach Anspruch 6, wobei die Fixierungskomponenten (8) jeweils Überstände sind, die an Böden des C-förmigen linken Eisenkerns (1) und des C-förmigen rechten Eisenkerns (2) angeformt sind.

8. Verfahren zum Herstellen der Statorstruktur des bürstenlosen Staubsaugermotors nach einem der Ansprüche 1 bis 7,
wobei die Statorstruktur eine geteilte Struktur aufweist und einen C-förmigen linken Eisenkern (1) und einen C-förmigen rechten Eisenkern (2) umfasst, die abnehmbar miteinander verbunden sind, um einen hufeisenförmigen Stator zu bilden,
wobei jeder des C-förmigen linken Eisenkerns (1) und des C-förmigen rechten Eisenkerns (2) ein oberes Ende, ein unteres Ende und einen longitudinalen Teil umfasst, der das obere Ende und das untere Ende verbindet,
wobei der C-förmige linke Eisenkern (1) und der C-förmige rechte Eisenkern (2) beide mit einer Spule umwickelt sind und durch Verschweißen ihrer unteren Enden miteinander fixiert sind; und
wobei die oberen Enden des C-förmigen linken Eisenkerns (1) und des C-förmigen rechten Eisenkerns (2) sich erstrecken, um Polschuhe zu bilden, zwischen denen ein Rotor aufgenommen werden kann,
wobei jeder Polschuh eine Vorderkante (3) und eine Hinterkante (4) umfasst und die Vorderkante (3) und die Hinterkante (4) des Polschuhs in der umlaufenden Richtung eines inneren Kreises des Polschuhs definiert sind, und
wobei die Vorderkante (3) von jedem Polschuh entgegen dem Uhrzeigersinn bezüglich einer Achse abgeknickt ist, die durch das Zentrum des inneren Kreises des Polschuhs und parallel zu dem longitudinalen Teil des entsprechenden C-förmigen Eisenkerns verläuft, um einen Phasenwinkel in einem Bereich von 30° bis 60° zu bilden, und wobei die Hinterkante (4) des Polschuhs abgerundet ist, um eine abgerundete Ecke (R) zu bilden,
wobei das Verfahren die folgenden Schritte umfasst:
1) Bearbeiten und Bilden jeweils des C-förmigen linken Eisenkerns (1) des C-förmigen rechten Eisenkerns (2) und Anformen von Fixierungskomponenten (8) für das Verschweißen an den unteren Enden des C-förmigen linken Eisenkerns (1) und des C-förmigen rechten Eisenkerns (2);
2) Fasen der Vorderkante (3) des Polschuhs von jedem des C-förmigen linken Eisenkerns (1) und des C-förmigen rechten Eisenkerns (2) mit einem Winkel in einem Bereich zwischen 30° und 60° gemäß einer Benutzungsanforderung, um einen entgegen dem Uhrzeigersinn abgeknickten Phasenwinkel zu bilden, und Abrunden der Hinterkante (4) des Polschuhs von jedem des C-förmigen linken Eisenkerns (1) und des C-förmigen rechten Eisenkerns (2), um die abgerundete Ecke (R) zu bilden;
3) Bearbeiten und Bilden einer Arretierungsnut (6) und eines Arretierungselements (7), die in Verbindungsflächen an jeweils den unteren Enden des C-förmigen linken Eisenkerns (1) und des C-förmigen rechten Eisenkerns (2) zueinander passen;
4) Wickeln von Spulenwicklungen (5) jeweils um den C-förmigen linken Eisenkern (1) und den C-förmigen rechten Eisenkern (2);
5) Einbringen des Arretierungselements (7) in die Arretierungsnut (6), um den C-förmigen linken Eisenkern (1) und den C-förmigen rechten Eisenkern (2) fixiert zu verbinden, um sicherzustellen, dass der C-förmige linke Eisenkern (1) und der C-förmige rechte Eisenkern (2) eine fixierte Relativposition aufweisen; und
6) Durchführen von Verschweißen an den Fixierungskomponenten (8), um letztlich den C-förmigen linken Eisenkern (1) und den C-förmigen rechten Eisenkern (2) zu verbinden, um die Statorstruktur des bürstenlosen Staubsaugermotors zu bilden.

## Revendications

1. Structure statorique d'un moteur d'aspirateur sans balai, dans laquelle la structure statorique a une structure séparée et comporte un noyau en fer gauche (1) en forme de C et un noyau en fer droit (2) en forme de C reliés de manière amovible l'un à l'autre pour former un stator en forme de fer à cheval,
dans laquelle le noyau en fer gauche (1) en forme de C et le noyau en fer droit (2) en forme de C comportent chacun une extrémité supérieure, une extrémité inférieure et une partie longitudinale reliant l'extrémité supérieure et l'extrémité inférieure, et le noyau en fer gauche (1) en forme de C et le noyau en fer droit (2) en forme de C sont tous les deux enroulés d'une bobine et fixés l'un à l'autre par soudage de leurs extrémités inférieures ; et
dans laquelle les extrémités supérieures du noyau en fer gauche (1) en forme de C et du noyau en fer droit (2) en forme de C s'étendent pour former des épanouissements polaires, entre lesquels un rotor peut être logé,
dans laquelle chaque épanouissement polaire comprend un bord avant (3) et un bord arrière (4), et le bord avant (3) et le bord arrière (4) de l'épanouissement polaire sont définis dans la direction circonférentielle d'un cercle intérieur de l'épanouissement polaire, et
dans laquelle le bord avant (3) de chaque épanouissement polaire est dévié dans le sens inverse des aiguilles d'une montre par rapport à un axe passant par le centre du cercle intérieur de l'épanouissement polaire et parallèle à la partie longitudinale du noyau en fer en forme de C respectif, afin de former un angle de chanfrein allant de 30 degrés à 60 degrés, et dans laquelle le bord arrière (4) de l'épanouissement polaire est arrondi pour former un coin arrondi (R).

2. Structure statorique du moteur d'aspirateur sans balai selon la revendication 1, dans laquelle le bord avant (3) de l'épanouissement polaire est dévié dans le sens inverse des aiguilles d'une montre par rapport à l'axe passant par le centre du cercle intérieur de l'épanouissement polaire et parallèle à la partie longitudinale du noyau en fer en forme de C respectif pour former l'angle de chanfrein de 45 degrés.

3. Structure statorique du moteur d'aspirateur sans balai selon la revendication 1, dans laquelle un enroulement de bobine (5) est enroulé autour de chacun du noyau en fer gauche (1) en forme de C et du noyau en fer droit (2) en forme de C, et le noyau en fer gauche (1) en forme de C et le noyau en fer droit (2) en forme de C, qui sont tous les deux enroulés avec l'enroulement de bobine (5), sont fixés puis combinés pour former la structure statorique du moteur d'aspirateur sans balai.

4. Structure statorique du moteur d'aspirateur sans balai selon la revendication 1, dans laquelle le noyau en fer gauche (1) en forme de C et le noyau en fer droit (2) en forme de C sont fixés de manière verrouillante, et des parties de connexion du noyau en fer gauche (1) en forme de C et du noyau en fer droit (2) en forme de C sont équipées d'une rainure de verrouillage (6) ou d'un élément de verrouillage (7) se correspondant mutuellement.

5. Structure statorique du moteur d'aspirateur sans balai selon la revendication 4, dans laquelle la rainure de verrouillage (6) et l'élément de verrouillage (7) ont chacun une section transversale rectangulaire, en forme de queue d'aronde ou en forme de U.

6. Structure statorique du moteur d'aspirateur sans balai selon la revendication 1, dans laquelle les parties de connexion du noyau en fer gauche (1) en forme de C et du noyau en fer droit (2) en forme de C s'étendent chacune vers l'extérieur pour former un composant de fixation (8), et les composants de fixation (8) du noyau en fer gauche (1) en forme de C et du noyau en fer droit (2) en forme de C sont fixés par soudage.

7. Structure statorique du moteur d'aspirateur sans balai selon la revendication 6, dans laquelle les composants de fixation (8) sont respectivement des protubérances formées intégralement sur des fonds du noyau en fer gauche (1) en forme de C et du noyau en fer droit (2) en forme de C.

8. Méthode pourformer la structure statorique du moteur d'aspirateur sans balai selon l'une quelconque des revendications 1 à 7,
dans laquelle la structure statorique a une structure séparée et comporte un noyau en fer gauche (1) en forme de C et un noyau en fer droit (2) en forme de C reliés de manière amovible l'un à l'autre pour former un stator en forme de fer à cheval,
dans laquelle chacun du noyau en fer gauche (1) en forme de C et du noyau en fer droit (2) en forme de C comportent une extrémité supérieure, une extrémité inférieure et une partie longitudinale reliant l'extrémité supérieure et l'extrémité inférieure,
dans laquelle le noyau en fer gauche (1) en forme de C et le noyau en fer droit (2) en forme de C sont tous les deux enroulés d'une bobine et fixés l'un à l'autre par soudage de leurs extrémités inférieures ; et
dans laquelle les extrémités supérieures du noyau en fer gauche (1) en forme de C et du noyau en fer droit (2) en forme de C s'étendent pour former des épanouissements polaires, entre lesquels un rotor peut être logé,
dans laquelle chaque épanouissement polaire comprend un bord avant (3) et un bord arrière (4), et le bord avant (3) et le bord arrière (4) de l'épanouissement polaire sont définis dans la direction circonférentielle d'un cercle intérieur de l'épanouissement polaire, et
dans laquelle le bord avant (3) de chaque épanouissement polaire est dévié dans le sens inverse des aiguilles d'une montre par rapport à un axe passant par le centre du cercle intérieur de l'épanouissement polaire et parallèle à la partie longitudinale du noyau en fer en forme de C respectif, afin de former un angle de chanfrein allant de 30 degrés à 60 degrés, et dans laquelle le bord arrière (4) de l'épanouissement polaire est arrondi pour former un coin arrondi (R),
la méthode comprenant les étapes suivantes :
1) usiner et former respectivement le noyau en fer gauche (1) en forme de C et le noyau en fer droit (2) en forme de C, et former intégralement des composants de fixation (8) pour le soudage sur les extrémités inférieures du noyau en fer gauche (1) en forme de C et du noyau en fer droit (2) en forme de C ;
2) chanfreiner le bord avant (3) de l'épanouissement polaire de chacun du noyau en fer gauche (1) en forme de C et du noyau en fer droit (2) en forme de C à un angle allant de 30 degrés à 60 degrés selon une exigence d'utilisation, pour former un angle de chanfrein dévié dans le sens inverse des aiguilles d'une montre, et arrondir le bord arrière (4) de l'épanouissement polaire de chacun du noyau en fer gauche (1) en forme de C et du noyau en fer droit (2) en forme de C pour former le coin arrondi (R) ;
3) usiner et former une rainure de verrouillage (6) et un élément de verrouillage (7) se correspondant mutuellement dans des surfaces de connexion aux extrémités inférieures du noyau en fer gauche (1) en forme de C et du noyau en fer droit (2) en forme de C, respectivement ;
4) enrouler des enroulement de bobine (5) autour respectivement du noyau en fer gauche (1) en forme de C et du noyau de fer droit (2) en forme de C ;
5) insérer l'élément de verrouillage (7) dans la rainure de verrouillage (6), pour relier de manière fixe le noyau en fer gauche (1) en forme de C et le noyau en fer droit (2) en forme de C, afin d'assurer que le noyau en fer gauche (1) en forme de C et le noyau en fer droit (2) en forme de C ont une position relative fixée ; et
6) procéder au soudage aux composants de fixation (8), pour finalement combiner le noyau en fer gauche (1) en forme de C et le noyau en fer droit (2) en forme de C pour former la structure statorique du moteur d'aspirateur sans balai.
